# EUROPEAN PATENT SPECIFICATION

(11) **EP 1 625 812 B1**
(45) Date of publication and mention of the grant of the patent: **03.10.2007**
(21) Application number: 05016954.9
(22) Date of filing: 04.08.2005
(51) Int. Cl.: A47J 31/00

(54) **An appliance for making and dispensing beverages**
Vorrichtung zum Zubereiten und Ausgeben von Getränken
Appareil pour la préparation et distribution de boissons

(30) Priority: 10.08.2004 IT BO20040524
(43) Date of publication of application: 15.02.2006
(73) Proprietor: Capuzzi, Carmine, 66016 Guardiagrele CH (IT)
(72) Inventor: Capuzzi, Carmine, 66016 Guardiagrele CH (IT)
(74) Representative: Dall'Olio, Giancarlo

(56) References cited:
- EP-A- 1 219 216
- WO-A-02/38016
- US-A- 4 649 809

## Description

### DESCRIPTION OF THE INVENTION

The present invention relates to the technical field regarding the making of beverages for alimentary use.

Specifically, the present invention relates to an appliance capable of making and dispensing beverages. Such an appliance is disclosed in US-A-4649809.

As regards the production and subsequent packaging of beverages for alimentary use, it is known that several types of drinks are currently available on the market, offered in containers of varied sizes and types, such as bottles, cans, Tetrapack containers and also bags containing the freeze-dried product.

Such beverages are put into such containers and then delivered for marketing through a distribution network. The vibrations and shakings the containers are subject to during such transport steps may cause, especially when the beverages are fizzy, a decrease in the carbon dioxide dissolved therein, thus being weakly fizzy and therefore poorly palatable upon consumption.

Moreover, the storage time of the beverages may be of several years, and it is therefore possible that they are drank by a user a long time after they have been packaged.

Although most beverages contain preservatives, upon consumption they may have lost, at least partly, their organoleptic characteristics and they may thus be partly altered.

The object of the present invention is to provide an appliance capable of making and dispensing beverages charged or not with preservatives, starting from a disposable capsule containing suitable substances, and to make such beverage immediately available for the consumption by a user.

A further object of the present invention is to provide an appliance which should allow dispensing water at ambient temperature or cold, still or fizzy.

A further object of the present invention is to provide an appliance capable of dispensing a coffee flavoured beverage starting from disposable pods.

A further object of the present invention is to provide an appliance which should allow easy removal of empty capsules and/or pods while preventing the user from getting dirty with the residual substances contained therein.

The aforementioned objects are achieved in accordance with the claims.

The features of the invention will appear more clearly from the following description of a preferred but non-exclusive embodiment, made with reference to the annexed drawing tables, wherein:
- figure 1 schematically shows a section view of the station for making a beverage;
- figure 2 schematically shows a view according to section II-II of figure 1;
- figure 3 schematically shows a section view of the station for making a coffee flavoured beverage;
- figure 4 schematically shows a view according to section IV-IV of figure 3;
- figure 5 schematically shows the control and beverage dispensing panel of the appliance of the invention;
- figure 6 schematically shows the construction layout of the appliance of the invention.

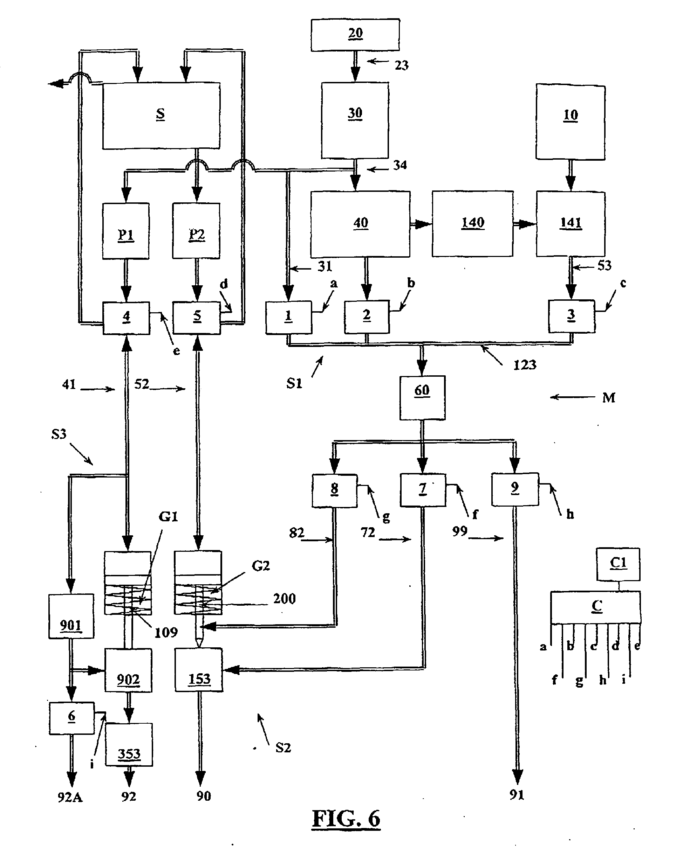

With reference to figure 6, letter M denotes the appliance proposed for making and dispensing beverages, provided with control means C1 associated to a control unit C which allows managing the operation of appliance M itself.

Such appliance M is provided with a first station S1 consisting of a source 20 of drinking water under pressure, for example drawn from a water mains, communicating through a first duct 23 with an active carbon filter for water micro-filtration, arranged downstream of source 20, intended for catching and thus remove any solid particles from the water.

In cascade with such filter 30 there are provided a second duct 31, whereon there is installed a first solenoid valve 1 managed by a control unit C, which connects it to a header 123, and a water cooling device 40. The latter is connected to filter 30 by a third duct 34 and is provided with a first outlet connected to header 123 by a duct fitted with a second solenoid valve 2. A second outlet of the cooling device 40 feeds a mixer (140, 141), also fed by a tank 10 containing carbon dioxide, which allows mixing the latter with water in order to obtain fizzy water. The outlet of the mixer (140, 141) is connected to header 123 by a fourth duct 53 fitted with a third solenoid valve 3.

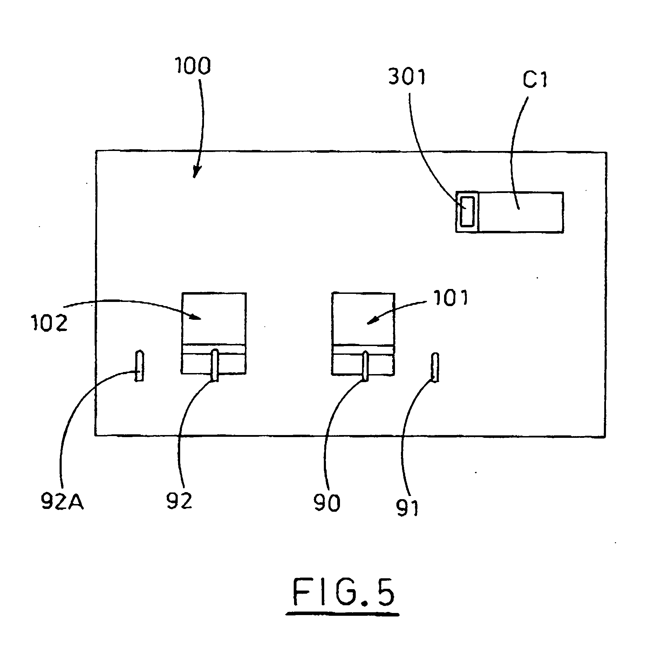

A sterilisation device 60, for example using UV rays, is shunted from header 123 and exhibits the outlet connected to respective seventh 7, eighth 8 and ninth 9 solenoid valves actuated by the aforementioned control unit C and respectively connected, by relevant pipes (72, 82, 99), to the outlet and the inlet of a second station 52, which shall be described hereinafter, and to a third spout 91 protruding outwards at a front panel 100 appliance M is provided with (figure 5).

Filter 30 feeds a first pump P1 whose outlet is connected to a third station 53, which shall be described hereinafter, by a fifth duct 41 onto which there is installed a fourth solenoid valve 4, managed by control unit C and of the three-way type, which allows communication between the first pump P1 itself and the third station S3, that is, between the latter and a water collecting tank S.

Such tank S feeds a second pump P2 whose outlet is connected to the second station S2 by a sixth duct 52 on which there is installed a fifth solenoid valve 5, managed by said control unit C and of the three-way type, which allows communication between the second pump P2 itself and the second station S2, that is, between the latter and the collecting tank S.

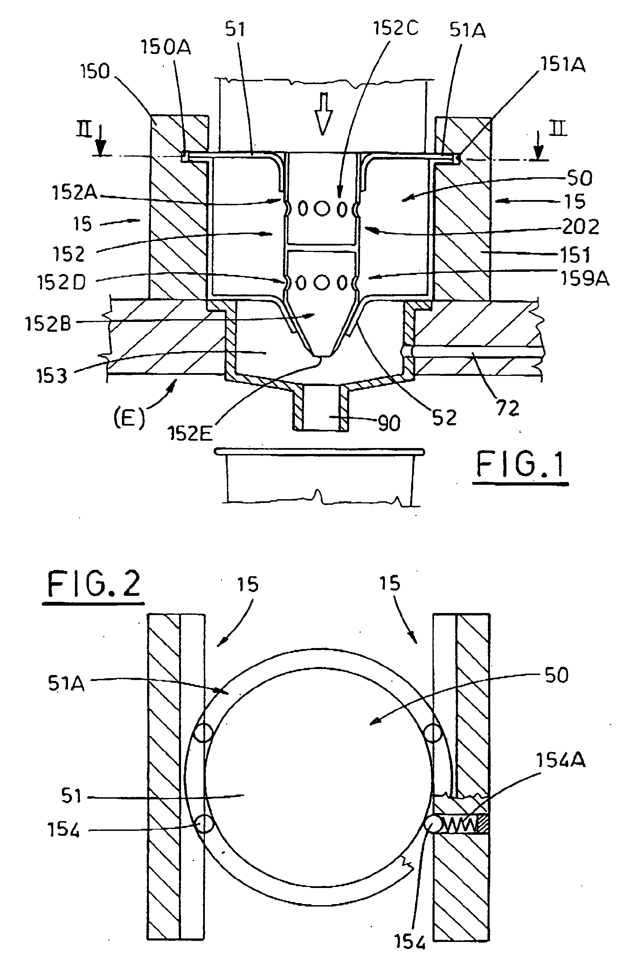

The second station S2 is installed downstream of the first station S1 and is accessible from the outside through a window 101 obtained on the front panel 100 (figure 5). Such second station S2 is provided with means 15 for receiving and removably holding a capsule 50 containing water soluble substances, in particular a concentrated product containing or not preservatives. Such means 15 comprise two walls facing each other (150, 151), substantially parallel, provided with respective grooves (150A, 151A) defining a seat suitable for receiving a portion of an edge 51 A with which capsule 50 is provided at the top (figures 1, 2).

A plurality of balls 154 associated in pairs to such walls (150, 151) by the interposition of first elastic members 154A, are intended for receiving a portion of the side surface of capsule 50 itself thereinbetween, thus defining its locking (figure 2).

Means 202, associated to the second station S2, are intended for punching capsule 50 and sprinkling the water under pressure coming from the first station S1 into the same. Such means 202 comprise a first axial movement tubular element 152, whose lower end exhibits a converging shape, which can be fed at the top with the water under pressure provided by the first station S1. Such tubular element 152 internally defines a first chamber 152A provided with a plurality of holes 152C suitable for allowing water under pressure to penetrate capsule 50. A second chamber 152B, defined inside the tubular element 152 below the first chamber 152A, is provided with a plurality of holes 152D and with a second hole 152E, respectively intended for allowing the conveying of the water and of the substances dissolved therein into the lower chamber 152B, and for conveying the same into an underlying collecting tank 153, communicating at the bottom with a first spout 90 provided on panel 100.

Such tubular element 152 is associated at the top with a second piston 200, sliding in a respective cylinder, moved by the actuation of the second pump P2, or by the action exerted by a first return spring G2, for respectively defining the introduction or extraction of water into and from the cylinder itself and determining for the tubular element 152 a non-operating configuration, wherein capsule 50 is inserted between the facing walls (150, 151), and an operating configuration E defined after the approach of the tubular element 152 itself to capsule 50 (figures 1, 6).

The first return spring G2 is calibrated so as to allow full rise of the second piston 200 when no water is introduced into the respective cylinder by the second pump P2.

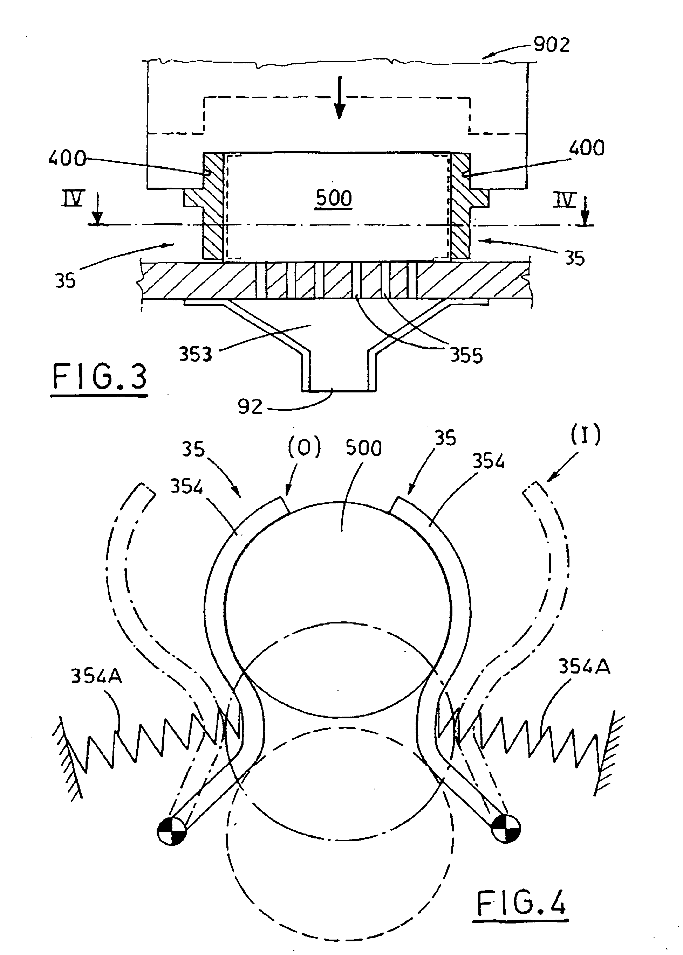

The third station S3 is installed downstream of the first station S1 and is accessible from the outside through a window 102 obtained on the front panel 100 (figure 5). Such third station S3 is provided with a pair of jaws 354, subject to second elastic members 354A, which carry out the removable grip of a pod 500 containing infusion products, in particular coffee. Jaws 354 are provided for operating between two extreme positions, a non-operating one (I), wherein there are wide apart by the effect of the introduction of pod 500 thereinbetween, and an operating one (O) wherein jaws 354 themselves contact the side surface of pod 500 itself by the action of the second elastic members 354A (figs. 3, 4).

Jaws 354 define at the top a profile shaped complementary to first members 400, provided at the bottom by a boiler (901, 902) fed by the first station S1 and capable of preventing, following the coupling with the latter, the opening of jaws 354 themselves.

The boiler (901, n902) is associated at the top with a first piston 109, sliding in a respective cylinder, moved following the actuation of the first pump P1, or by the action exerted by a second return spring G1, for respectively defining the introduction or extraction of water into and from the cylinder itself and determining for members 400 a non-operating configuration, for receiving pod 500 between jaws 354, and an operating configuration defined after the lowering of the boiler (901, 902) and consequent coupling between the upper portion of jaws 354 and the first members 400.

The second return spring G1 is calibrated so as to allow full rise of the first piston 109 when no water is introduced into the respective cylinder by the first pump P1 (figures 3, 6).

Such third station S3 is provided with a sixth solenoid valve 6, managed by control unit C, installed on a piping protruding from the boiler (901, 902) and leading into a fourth spout 92A, provided on panel 100, for dispensing hot water (figures 5, 6). Station S3 is provided with a base, adapted for receiving the lower portion of pod 500, provided with a plurality of through holes 355 intended for conveying the infusion outwards of pod 500 itself and communicating at the bottom with a collecting tank 353 of the infusion itself.

Such tank 353 communicates at the bottom with a second spout 92, provided on panel 100, and is intended for directing the infusion itself towards the latter (figure 3).

Appliance M, preferably at panel 100, is provided with members 301 for accepting payment means (for example coins) for creating a credit and suitable for actuating appliance M itself (figure 5).

The operating modes of the proposed appliance M shall now be described. Starting from a condition wherein all solenoid valves are initially closed, a user introduces a suitable amount of money into the acceptance members 301 and introduces capsule 50 between the facing walls (150, 151), engaging a portion of the upper edge 51A of the same into the grooves (150A, 151A). By selecting the option of dispensing a beverage at ambient temperature by the control means C1, control unit C actuates the fifth solenoid valve 5 and therefore the second pump P2. The latter draws water from tank S and introduces it into the upper chamber of the cylinder wherein the second piston 200 slides, which starting the descent step, causes the approach of the tubular element 152 to capsule 50 and the consequent punching of cover 51 and bottom 52 of the same (figure 1).

Control unit C then actuates the first solenoid valve 1, which allows the introduction of water at ambient temperature into header 123 and, in suitable phase relation with the punching of capsule 50, it actuates the seventh solenoid valve 7 for a predetermined time interval, causing the dispensing of a predetermined amount of water at ambient temperature from the first spout 90, sterilised by the device using UV rays, which is collected in a glass arranged by the user below the first spout 90 itself. Afterwards, control unit C establishes the connection between the tubular element 152 and the first station S1 by actuating the eighth solenoid valve 8, thus causing the inlet of water into the first chamber 152A and the outlet of the same through holes 152C, for penetrating capsule 50 and mixing with the substances contained therein. Such mixture enters in the second chamber 152B through holes 152D, is conveyed to the collecting chamber 153 through the second hole 152E and finally dispensed through the first spout 90. Such mixture, mixing with the water dispensed before and present on the glass bottom, produces the beverage at ambient temperature.

Once the beverage has been dispensed, control unit C deactivates the second pump P2, so that the first return spring G2 causes the rise of the second piston P2 and thus of the tubular element 152, determining the release of the latter from capsule 50 and the emptying of the upper chamber of the cylinder. In this step, the fifth solenoid valve 5 is controlled by control unit C so that it allows the water flow from the cylinder itself to tank S.

The introduction of a new capsule between the facing walls (150, 151) by the user causes the removal of the empty capsule from the same.

If the dispensing of a cold drink is desired, the appliance operation differs from what described above in that control unit C actuates the second solenoid valve 2 rather than the first one 1, in order to cause the introduction of cold water into header 123.

If the dispensing of a cold and fizzy drink is desired, the appliance operation differs from what described with reference to the first case in that control unit C actuates the third solenoid valve 3 rather than the first one 1, in order to cause the introduction of cold fizzy water into header 123.

By selecting the option of dispensing water at ambient temperature by the control means C1, control unit C actuates the first 1 and the ninth 9 solenoid valves, causing the dispensing of the water itself from the third spout 91.

By selecting the option of dispensing cold water by the control means C1, control unit C actuates the second 2 and the ninth 9 solenoid valves, causing the dispensing of the water itself from the third spout 91.

By selecting the option of dispensing cold and fizzy water by the control means C1, control unit C actuates the third 3 and the ninth 9 solenoid valves, causing the dispensing of the water itself from the third spout 91.

On the other hand, to obtain a coffee flavoured beverage, the operator introduces pod 500 between jaws 354 and selects the corresponding dispensing option by the control means C1.

Control unit C actuates the fourth solenoid valve 4 and thus the first pump P1, which draws water from the water mains 20, through filter 30, and introduces it both in the boiler (901, 902), and in the upper chamber of the cylinder wherein the first piston 1098 slides. The latter begins the descent step, causing the approach of the boiler (901, 902) to pod 500 and the consequent sprinkling of the latter with hot water under pressure.

The coffee flavoured beverage thus obtained, through holes 355, reaches the collecting tank 353 and is then dispensed through the second spout 92.

Once the coffee flavoured beverage has been dispensed, control unit C deactivates the first pump P1, so that the second return spring G1 causes the rise of the first piston P1 and thus of the boiler (901, 902), causing the emptying of the upper chamber of the cylinder. In this step, the fourth solenoid valve 4 is controlled by control unit C so that it allows the water flow from the cylinder itself to tank S.

The introduction of a new pod between jaws 354 by the user causes the removal of the empty pod from the same (figure 4).

If the dispensing of hot water is desired, control unit C actuates the fourth solenoid valve 4 and thus the first pump P1, which draws water from the water mains 20, through filter 30, and introduces it into the boiler (901, 902). The following actuation of the sixth solenoid valve 6 by control unit C, causes the dispensing of hot water from the fourth spout 92A.

Advantageously, the proposed appliance allows easy removal of empty capsules: the latter capsules are in fact ejected by simply introducing a new capsule into the special seat, while preventing the user from getting dirty with the residual substances contained in the empty capsule itself.

The proposed appliance further provides the beverage to a user a few moments after it has been made and dispensed.

The invention under discussion of course is described with reference to the annexed drawings by way of a non-limiting example and it is therefore clear that it can be subject to any changes and variations falling within the scope defined by the following claims.

## Claims

1. An appliance for making and dispensing beverages, ***characterised in that*** it includes:
a first station (S1) for dispensing water under pressure;
a second station (S2), installed downstream of said first station (S1), accessible from the outside through a window (101) obtained on a front panel (100) of said appliance (M) and provided with means (15) for receiving and removably holding a capsule (50) containing water soluble substances;
means (202), associated to said second station (S2), intended for punching said capsule (50) and sprinkling the water under pressure coming from said first station (S1) into the same;
conveying means (159A), intended for directing the water and the substances dissolved therein towards the outside of said capsule (50);
channelling means (153), arranged downstream of said capsule (50), provided for directing the water and the substances dissolved therein towards a first spout (90) protruding outwards at said panel (100);
a third station (S3), installed downstream of said first station (S1), accessible from the outside through a window (102) obtained on said front panel (100) and comprising members (35) for the removable grip of a pod (500) containing infusion products;
a boiler (901, 902), fed by said first station (S1), moved in approach/removal to and from said pod (500) and forming at the bottom first members cooperating with said gripping members (35) for defining members for holding said pod (500) between the latter;
members, associated to the lower portion of said boiler (901, 902), suitable for introducing into said pod (500) the heated water under pressure coming from the boiler itself;
conveying members (355), provided downstream of said pod (500), intended for channelling the infusion outwards of pod (500) itself;
dispensing members (353), arranged below said conveying members (355), intended for directing the infusion itself towards a second spout (92) protruding outwards at said panel (100);
control means (C1) associated to a control unit (C) suitable for managing the operation of said appliance (M).

2. An appliance according to claim 1, ***characterised in that*** said first station (S1) comprises: a source (20) of water under pressure, a water micro-filtration device (30), fed by said source by a first duct (23), connected to a header (123) by a second duct (31) on which there is a first solenoid valve (1) suitable, following the actuation by said control unit (C), for determining the introduction of water at ambient temperature into header (123) itself; a water cooling device (40) connected downstream of said micro-filtration device (30) by a third duct (34), provided with a first outlet connected to said header (123) by a duct provided with a second solenoid valve (2) whose actuation by said control unit (C) causes the introduction of cold water into header (123) itself; a mixer (140, 141), fed both by said cooling device (40) and by a gas supplied by a tank (10), having the outlet connected to said header (123) by a fourth duct (53) provided with a third solenoid valve (3) suitable, following the actuation by said control unit (C), for determining the introduction of fizzy water into said header (123); a sterilisation device (60) shunted from said header (123) having the outlet connected to respective seventh (7), eighth (8) and ninth (9) solenoid valves actuated by said control unit (C) and respectively connected, by relevant pipes (72, 82, 99), to said channelling means (153), to said punching and sprinkling means (202) and to a third spout (91) protruding outwards at said panel (100); a second pump (P2), fed by said tank (S), whose outlet is connected to said second station (S2) by a sixth duct (52) on which there is installed a fifth solenoid valve (5), managed by said control unit (C), provided for allowing the flow of water under pressure from said second pump (P2) to said second station (S2) or from the latter to a collecting tank (S).

3. An appliance according to claim 1, ***characterised in that*** said first station (S1) comprises: a source (20) of water under pressure; a water micro-filtration device (30), fed by said source through a first duct (23); a first pump (P1), fed by said filter (30), having the outlet connected to said third station (S3) by a fifth duct (41) on which there is installed a fourth solenoid valve (4), managed by said control unit (C), suitable for allowing the flow of water under pressure from said first pump (P1) to said third station (S3) or from the latter to a collecting tank (S).

4. An appliance according to claim 1, ***characterised in that*** said first station (S1) comprises: a source (20) of water under pressure; a water micro-filtration device (30), fed by said source by a first duct (23), connected to a header (123) by a second duct (31) on which there is a first solenoid valve (1) suitable, following the actuation by said control unit (C), for determining the introduction of water at ambient temperature into header (123) itself; a water cooling device (40) connected downstream of said micro-filtration device (30) by a third duct (34), provided with a first outlet connected to said header (123) by a duct provided with a second solenoid valve (2) whose actuation by said control unit (C) causes the introduction of cold water into header (123) itself; a mixer (140, 141), fed both by said cooling device (40) and by a gas supplied by a tank (10), having the outlet connected to said header (123) by a fourth duct (53) provided with a third solenoid valve (3) suitable, following the actuation by said control unit (C), for determining the introduction of fizzy water into said header (123); a sterilisation device (60) shunted from said header (123) having the outlet connected to respective seventh (7), eighth (8) and ninth (9) solenoid valves actuated by said control unit (C) and respectively connected, by relevant pipes (72, 82, 99), to said channelling means (153), to said punching and sprinkling means (202) and to a third spout (91) protruding outwards at said panel (100); a first pump (P1); fed by said filter (30), having the outlet connected to said third station S3) by a fifth duct (41) on which there is installed a fourth solenoid valve (4), managed by said control unit (C), suitable for allowing the flow of water under pressure from said first pump (P1) to said third station (S3) or from the latter to a collecting tank (S); a second pump (P2), fed by said tank (S), having the outlet connected to said second station (S2) by a sixth duct (52) on which there is installed a fifth solenoid valve (5), managed by said control unit (C), provided for allowing the flow of water under pressure from said second pump (P2) to said second station (S2) or from the latter to said collecting tank (S).

5. An appliance according to claim 1, ***characterised in that*** said means (15) for receiving and holding said capsule (50) comprise: two facing walls (150, 151), substantially parallel, provided with respective grooves (150A, 151A) defining a seat adapted for receiving at least one portion of an edge (51A) said capsule (50) is provided with at the top, for preventing axial movements of the latter and facilitating the release of said punching means (202) from capsule (50) itself; a plurality of balls (154) associated, in pairs, to said facing walls (150,151) by the interposition of first elastic members (154A), adapted for receiving at least one portion of the said surface of said capsule (50) thereinbetween.

6. An appliance according to claim 1, ***characterised in that*** said punching and sprinkling means (202) comprise an axial-movement tubular element (152), whose lower end exhibits a converging shape, which can be fed at the top with the water under pressure provided by said first station (S1) and internally defining a first chamber (152A) provided with a plurality of holes (152C) adapted for allowing said water under pressure to penetrate said capsule (50), *and **in that*** said conveying means (159A) comprise a second chamber (152B), defined inside said tubular element (152) below said first chamber (152A), provided with at least a first (152D) and a second (152E) hole, respectively intended for allowing the conveying into said lower chamber (152B) of the water and of said substances dissolved therein, and conveying the same into said channelling means (153).

7. An appliance according to claim 2 or 4, ***characterised in that*** said punching and sprinkling means (202) are actuated by a second piston (200), sliding in a respective cylinder, moved by the effect of the actuation of said second pump (P2), or by the action exerted by a first return spring (G2), for respectively defining the introduction or the extraction of water into and from the cylinder itself and for determining a non-operating configuration for said punching and sprinkling means (202), wherein said capsule (50) is inserted between said receiving means (15), and an operating configuration (E) defined following the approach of said punching and sprinkling means (202) to said capsule (50), with consequent punching of cover (51) and of bottom (52) of the same carried out by the punching and sprinkling means (202) themselves, with said control unit (C) being provided, in suitable phase relation with the performance of said punching, for actuating said seventh solenoid valve (7) for a predetermined time interval and afterwards for connecting said punching and sprinkling means (202) with said first station (S1) by the actuation of said eighth solenoid valve (8), for respectively defining the dispensing of a predetermined amount of water from said first spout (90) and the dispensing of a predetermined amount of water and of the substances dissolved therein from the same.

8. An appliance according to claim 1 or 2, ***characterised in that*** said channelling means comprise a tank (153) for collecting water and the substances dissolved therein, communicating at the bottom with said first spout (90), adapted for receiving said conveying means (159A).

9. An appliance according to claim 1, ***characterised in that*** said gripping members (35) consist of a pair of jaws (354), subject to second elastic members (354A), provided for operating between two extreme positions, a non-operating one (I), wherein said jaws (354) are wide apart by the effect of the introduction of said pod (500) thereinbetween, and an operating one (O) wherein said jaws (354) contact the side surface of pod (500) itself by the action of said second elastic members (354A).

10. An appliance according to claim 9, ***characterised in that*** said jaws (354) define at the top, a profile shaped complementary to said first members (400) and capable of preventing, following the coupling with the latter, the opening of jaws (354) themselves.

11. An appliance according to claim 1, ***characterised in that*** said conveying members consist of a plurality of through holes (355), obtained on a base adapted for receiving the lower portion of said pod (500), communicating at the bottom with said dispensing members (353).

12. An appliance according to claim 2 or 4, ***characterised in that*** said dispensing members comprise a tank (353) for collecting the infusion, communicating at the bottom with said second spout (92).

13. An appliance according to claim 1, ***characterised in that*** said boiler (901, 902) is moved by a first piston (109), sliding in a respective cylinder, moved following the actuation of said first pump (P1), or the action exerted by a second return spring (G1), for respectively defining the introduction or the extraction of water into and from the cylinder itself and determining for said first members (400) a non-operating configuration, of reception of said pod (500) between said jaws (354), and an operating configuration defined following the lowering of said boiler (901, 902) and consequent coupling between the upper portion of said jaws (354) and said first members (400), with said control unit (C) provided for connecting said boiler (901, 902) and said first station (S1) and for determining, after a predetermined pressure value is reached inside the boiler (901, 902) itself, the dispensing of the infusion through said second spout (92).

14. An appliance according to claim 1, ***characterised in that*** said boiler (901, 902) communicates with a fourth spout (92A) through a channelling on which there is provided a sixth solenoid valve (6) whose actuation by said control unit (C) causes the dispensing of hot water through the fourth spout (92A) itself.

15. An appliance according to claim 1, ***characterised in that*** connected to said control unit (C), there are provided members (301) for accepting payment means for creating a credit, adapted for actuating appliance (M) itself.

16. An appliance according to claims 1, ***characterised in that*** the substances contained in said capsule (50) consist of a concentrated product.

17. An appliance according to claims 2, 3, 4, ***characterised in that*** said source (2) consists of the water mains.

18. An appliance according to claims 2, 4, ***characterised in that*** the gas supplied by said tank (10) consists of carbon dioxide.

## Patentansprüche

1. Vorrichtung zum Zubereiten und Ausgeben von Getränken, **dadurch gekennzeichnet, dass** sie umfasst:
eine erste Station (S1) zum Abgeben von Wasser unter Druck;
eine zweite Station (S2), die abstromseitig der ersten Station (S1) installiert ist, von der Außenseite durch ein Fenster (101) auf einem Vorderpaneel (100) der Vorrichtung (M) zugänglich ist und mit Einrichtungen (15) zur Aufnahme und lösbaren Halterung einer Kapsel (50), die wasserlösliche Substanzen enthält, versehen ist;
Einrichtungen (202), die der zweiten Station (S2) zugeordnet sind und zum Durchstoßen der Kapsel (50) sowie zum Einspritzen des von der ersten Station (S1) kommenden Wassers unter Druck in die Kapsel dienen; Fördereinrichtungen (159A), die das Wasser und die darin gelösten Substanzen zur Außenseite der Kapsel (50) leiten;
Führungseinrichtungen (153), die abstromseitig der Kapsel (50) angeordnet sind und dazu dienen, das Wasser und die darin gelösten Substanzen zu einem ersten Auslauf (90) zu führen, der am Paneel (100) nach außen vorsteht;
eine dritte Station (S3), die abstromseitig der ersten Station (S1) installiert ist, von der Außenseite durch ein Fenster (102) auf dem Vorderpaneel (100) zugänglich ist und Elemente (35) zum lösbaren Ergreifen einer Aufgussprodukte enthaltenden Schale (500) aufweist;
eine Siedeeinrichtung (910, 902), die von der ersten Station (S1) versorgt und zur Annäherung an die Schale (500) sowie zur Entfernung von dieser bewegt wird und am Boden erste Elemente bildet, die mit den Griffelementen (35) zusammenwirken, um Elemente zum Halten der Schale (500) zwischen letzteren zu bilden;
Elemente, die dem unteren Abschnitt der Siedeeinrichtung (901, 902) zugeordnet und geeignet sind, das von der Siedeeinrichtung kommende heiße Wasser unter Druck in die Schale (500) einzuführen;
Förderelemente (355), die abstromseitig der Schale (500) vorgesehen sind und dazu dienen, den Aufguss von der Schale (500) nach außen zu führen;
Ausgabeelemente (353), die unter den Förderelementen (355) angeordnet sind und dazu dienen, den Ausguss zu einem zweiten Auslauf (92) zu führen, der am Paneel (100) nach außen vorsteht;
Steuereinrichtungen (C1), die einer Steuereinheit (C) zugeordnet und zum Steuern der Funktion der Vorrichtung (M) geeignet sind.

2. Vorrichtung nach Anspruch 1, **dadurch gekennzeichnet, dass** die erste Station S1 umfasst: eine Quelle (20) von unter Druck stehendem Wasser; eine Wassermikrofiltrationsvorrichtung (30), die von der Quelle über einen ersten Kanal (23) versorgt ist, der an einen Verteiler (23) über einen zweiten Kanal (31) angeschlossen ist, an dem sich ein erstes Solenoidventil (1) befindet, das durch Betätigung von der Steuereinheit (C) dazu dient, Wasser unter Raumtemperatur in den Verteiler (123) einzuführen; eine Wasserkühlvorrichtung (40), die abstromseitig der Mikrofiltrationsvorrichtung (30) über einen dritten Kanal (34) angeschlossen ist, der mit einem ersten Auslass versehen ist, der mit dem Verteiler (123) über einen Kanal verbunden ist, welcher ein zweites Solenoidventil (2) aufweist, dessen Betätigung durch die Steuereinheit (C) die Einführung von kaltem Wasser in den Verteiler (123) bewirkt; einen Mischer (140, 141), der sowohl von der Kühlvorrichtung (40) als auch von einem Gas beschickt wird, das über einen Tank (10) zugeführt wird, dessen Auslass mit dem Verteiler (123) über einen vierten Kanal (53) verbunden ist, welcher mit einem dritten Solenoidventil (3) versehen ist, das durch Betätigung durch die Steuereinheit (C) die Einführung von sprudelndem Wasser in den Verteiler (123) bewirkt; eine zum Verteiler (123) parallelgeschaltete Sterilisationsvorrichtung (60), deren Auslass an ein siebtes (7), achtes (8) und neuntes (9) Solenoidventil angeschlossen ist, welche von der Steuereinheit (C) betätigt werden und über entsprechende Rohre (72, 82, 99) an die Führungseinrichtungen (153), die Einrichtungen (202) zum Durchstoßen und zum Einspritzen und an einen dritten Auslauf (91), der am Paneel (100) nach außen vorsteht, angeschlossen sind; eine zweite Pumpe (P2), die vom Tank (S) versorgt wird und deren Auslass an die zweite Station (S2) über einen sechsten Kanal (52) angeschlossen ist, an dem ein fünftes Solenoidventil (5) installiert ist, das von der Steuereinheit (C) gesteuert wird und einen Strom von unter Druck stehendem Wasser von der zweiten Pumpe (P2) zur zweiten Station (S2) oder von letzterer zu einem Sammeltank (S) ermöglicht.

3. Vorrichtung nach Anspruch 1, **dadurch gekennzeichnet, dass** die erste Station (S1) umfasst: eine Quelle (20) von unter Druck stehendem Wasser; eine wassermikrofiltrationsvorrichtung (30), die von der Quelle über einen ersten Kanal (23) versorgt wird; eine erste Pumpe (P1), die vom Filter (30) versorgt wird und deren Auslass an die dritte Station (S3) über einen fünften Kanal (41) angeschlossen ist, an dem ein viertes Solenoidventil (4) installiert ist, das von der Steuereinheit (C) gesteuert wird und einen Strom von unter Druck stehendem Wasser von der ersten Pumpe (P1) zur dritten Station (S3) oder von letzterer zu einem Sammeltank (S) ermöglicht.

4. Vorrichtung nach Anspruch 1, **dadurch gekennzeichnet, dass** die erste Station (S1) umfasst: eine Quelle (20) von Wasser unter Druck; eine Wassermikrofiltrationsvorrichtung (30), die von der Quelle über einen ersten Kanal (23) versorgt wird, der mit einem Verteiler (123) über einen zweiten Kanal (31) verbunden ist, an dem ein erstes Solenoidventil (1) angeordnet ist, das durch Betätigung durch die Steuereinheit (C) die Einführung von Wasser bei Raumtemperatur in den Verteiler (123) bewirkt; eine Wasserkühlvorrichtung (40), die abstromseitig der Mikrofiltrationsvorrichtung (30) über einen dritten Kanal (34) angeschlossen ist, der mit einem ersten Auslass versehen ist, der mit dem Verteiler (123) über einen Kanal verbunden ist, der mit einem zweiten Solenoidventil (2) versehen ist, dessen Betätigung durch die Steuereinheit (C) die Einführung von kaltem Wasser in den Verteiler (123) bewirkt; einen Mischer (140, 141), der sowohl durch die Kühlvorrichtung (40) als auch durch ein Gas beschickt wird, das von einem Tank (10) zugeführt wird, wobei dessen Auslass mit dem Verteiler (123) über einen vierten Kanal (53) verbunden ist, der mit einem dritten Solenoidventil (3) versehen ist, das durch die Betätigung der Steuereinheit (C) die Einführung von sprudelndem Wasser in den Verteiler (123) bewirkt; eine Sterilisationsvorrichtung (60), die zum Verteiler (123) parallel geschaltet ist und deren Auslass mit einem siebten (7), achten (8) und neunten (9) Solenoidventil verbunden ist, die von der Steuereinheit (C) betätigt werden und über entsprechende Rohre (72, 82, 99) mit den Führungseinrichtungen (153), den Einrichtungen (202) zum Durchstoßen und Einspritzen und einem dritten Auslauf (91), der am Paneel (100) nach außen vorsteht, verbunden sind; eine erste Pumpe (P1), die vom Filter (30) versorgt wird und deren Auslass mit der dritten Station (S3) über einen fünften Kanal (41) verbunden ist, an dem ein viertes Solenoidventil (4) installiert ist, das von der Steuereinheit (C) gesteuert wird und einen Fluss von Wasser unter Druck von der ersten Pumpe (P1) zur dritten Station (S3) oder von letzterer zu einem Sammeltank (s) ermöglicht; eine zweite Pumpe (P2), die vom Tank (S) versorgt wird, und deren Auslass mit der zweiten Station (S2) über eine sechsten Kanal (52) verbunden ist, an dem ein fünftes Solenoidventil (5) installiert ist, das von der Steuereinheit (C) gesteuert wird und einen Strom von Wasser unter Druck von der zweiten Pumpe (P2) zur zweiten Station (S2) oder von letzterer zum Sammeltank (S) ermöglicht.

5. Vorrichtung nach Anspruch 1, **dadurch gekennzeichnet, dass** die Einrichtungen (15) zum Aufnehmen und Halten der Kapsel (50) umfassen: zwei gegenüberliegende Wände (150, 151), die im Wesentlichen parallel verlaufen und mit entsprechenden Nuten (150A, 151A) versehen sind, die einen Sitz bilden, der mindestens einen Abschnitt eines Randes (51A) der Kapsel (50) aufnehmen kann, mit dem die Kapsel am oberen Ende versehen ist, um Axialbewegungen der letzteren zu verhindern und das Lösen der Einrichtungen (202) zum Durchstoßen von der Kapsel (50) zu erleichtern; eine Vielzahl von Kugeln (154), die paarweise den gegenüberliegenden Wänden (150, 151) durch Zwischenanordnung von ersten elastischen Elementen (145A) zugeordnet sind, welche mindestens einen Abschnitt der Oberfläche der Kapsel (50) dazwischen aufnehmen können.

6. Vorrichtung nach Anspruch 1, **dadurch gekennzeichnet, dass** die Einrichtungen (202) zum Durchstoßen und Einspritzen ein rohrförmiges Axialbewegungselement (152) umfassen, dessen unteres Ende eine konvergierende Form besitzt und das am oberen Ende mit dem unter Druck stehenden Wasser aus der ersten Station (S1) versorgt werden kann sowie im inneren eine erste Kammer (152A) bildet, die mit einer Vielzahl von Löchern (152C) versehen ist, die es ermöglichen, dass das unter Druck stehende Wasser in die Kapsel (50) eindringt, und dass die Fördereinrichtungen (159A) eine zweite Kammer (152B) umfassen, welche innerhalb des rohrförmigen Elementes (152) unter der ersten Kammer (152A) ausgebildet ist und mit mindestens einem ersten (152D) und einem zweiten (152E) Loch versehen ist, die dazu dienen, das Wasser und die darin gelösten Substanzen in die untere Kammer (152B) und in die Führungseinrichtungen (153) zu fördern.

7. Vorrichtung nach Anspruch 2 oder 4, **dadurch gekennzeichnet, dass** die Einrichtungen (202) zum Durchstoßen und zum Einspritzen durch einen zweiten Kolben (200) betätigt werden, der in einem entsprechenden Zylinder gleitet und durch die Betätigung der zweiten Pumpe (P2) oder durch die von einer ersten Rückführfeder (G2) ausgeübten Kraft bewegt wird, um die Einführung oder Ausführung von Wasser in den Zylinder und aus dem Zylinder vorzusehen und einen Außerbetriebszustand für die Einrichtungen (202) zum Durchstoßen und zum Einspritzen vorzusehen, wobei die Kapsel (50) zwischen die Aufnahmeeinrichtungen (15) eingesetzt ist, sowie einen Betriebszustand (E), der nach der Annäherung der Einrichtungen (202) zum Durchstoßen und Einspritzen an die Kapsel (50) gebildet wird mit nachfolgendem Durchstoßen der Abdeckung (51) und des Bodens (52) der Kapsel, das von den Einrichtungen (202) zum Durchstoßen und Einspritzen durchgeführt wird, wobei die Steuereinheit (C) in einer geeigneten Phasenbeziehung mit der Durchführung des Vorgangs zum Durchstoßen steht, um das siebte Solenoidventil (9) über ein vorgegebenes Zeitintervall zu betätigen und danach die Einrichtungen (202) zum Durchstoßen und zum Einspritzen mit der ersten Station (S1) durch Betätigung des achten Solenoidventils (8) zu verbinden und das Ausgeben einer vorgegebenen Wassermenge vom ersten Auslauf (90) sowie das Ausgeben einer vorgegebenen Wassermenge und der darin gelösten Substanzen von demselben vorzusehen.

8. Vorrichtung nach Anspruch 1 oder 2, **dadurch gekennzeichnet, dass** die Führungseinrichtungen einen Tank (153) zum Sammeln von Wasser und der darin gelösten Substanzen aufweisen, der am Boden mit dem ersten Auslauf (90) in Verbindung steht und die Fördereinrichtungen (159A) aufnehmen kann.

9. Vorrichtung nach Anspruch 1, **dadurch gekennzeichnet, dass** die Griffelemente (35) aus einem Paar von Klauen (354) bestehen, die zu zweiten elastischen Elementen (354A) gehören, welche für eine Betätigung zwischen zwei Extrempositionen vorgesehen sind, nämlich einer Außerbetriebsstellung (I), in der die Klauen (354) durch den Effekt der Einführung der Schale (500) dazwischen weit voneinander entfernt sind, und einer Betriebsstellung (O), in der die Klauen (354) die Seitenfläche der Schale (500) durch die Wirkung der zweiten elastischen Elemente (354A) kontaktieren.

10. Vorrichtung nach Anspruch 9, **dadurch gekennzeichnet, dass** die Klauen (354) am oberen Ende ein Profil aufweisen, das komplementär zu den ersten Elementen (400) ausgebildet und in der Lage ist, nach dem Koppeln mit denselben ein Öffnen der Klauen (354) zu verhindern.

11. Vorrichtung nach Anspruch 1, **dadurch gekennzeichnet, dass** die Förderelemente aus einer vielzahl von Durchgangslöchern (355) bestehen, die auf einer Basis angeordnet sind, welche zur Aufnahme des unteren Abschnittes der Schale (500) dient und am Boden mit den Ausgabeelementen (353) in Verbindung steht.

12. Vorrichtung nach Anspruch 2 oder 4, **dadurch gekennzeichnet, dass** die Ausgabeelemente einen Tank (353) zum Sammeln des Aufgusses umfassen, der am Boden mit dem Auslauf (92) in Verbindung steht.

13. Vorrichtung nach Anspruch 1, **dadurch gekennzeichnet, dass** die Siedeeinrichtung (901, 902) durch einen ersten Kolben (109) bewegt wird, der in einem entsprechenden Zylinder gleitet, und zwar durch die Betätigung der ersten Pumpe (P1) oder die von einer zweiten Rückführfeder (G1) ausgeübte Kraft, um die Einführung oder Ausführung von Wasser in den Zylinder und aus dem Zylinder zu bewirken und für die ersten Elemente (400) einen Nichtbetriebszustand der Aufnahme der Schale (500) zwischen den Klauen (354) und einen Betriebszustand nach der Absenkung der Siedeeinrichtung (901, 902) und der nachfolgenden Kopplung zwischen dem oberen Abschnitt der Klauen (345) und den ersten Elementen (400) festzulegen, wobei die Steuereinheit (C) zum Verbinden der Siedeeinrichtung (901, 902) und der ersten Station (S1) und zum Ausgeben des Aufgusses durch den zweiten Auslauf (92), nachdem ein vorgegebener Druckwert innerhalb des Siedegefäßes (901, 902) erreicht ist, vorgesehen ist.

14. Vorrichtung nach Anspruch 1, **dadurch gekennzeichnet, dass** das Siedegefäß (901, 902) mit einem vierten Auslauf (92A) über eine Führung in Verbindung steht, an der ein sechstes Solenoidventil (6) vorgesehen ist, dessen Betätigung durch die Steuereinheit (C) die Ausgabe von heißem Wasser durch den vierten Auslauf (92A) bewirkt.

15. Vorrichtung nach Anspruch 1, **dadurch gekennzeichnet, dass** mit der Steuereinheit (C) Elemente (301) verbunden sind, um Zahlungsmittel zur Erzeugung eines Guthabens zur Betätigung der Vorrichtung (M) zu akzeptieren.

16. Vorrichtung nach Anspruch 1, **dadurch gekennzeichnet, dass** die in der Kapsel (50) enthaltenen Substanzen aus einem konzentrierten Produkt bestehen.

17. Vorrichtung nach Anspruch 2, 3, 4, **dadurch gekennzeichnet, dass** die Quelle (2) aus Leitungswasser besteht.

18. Vorrichtung nach Anspruch 2, 4, **dadurch gekennzeichnet, dass** das vom Tank (10) zugeführte Gas aus Kohlendioxid besteht.

## Revendications

1. Appareil pour fabriquer et distribuer des boissons, ***caractérisé en ce qu*'**il comprend :
un premier poste (S1) pour distribuer de l'eau sous pression ;
un deuxième poste (S2), installé en aval dudit premier poste (S1), accessible depuis l'extérieur par une fenêtre (101) pratiquée dans un panneau avant (100) dudit appareil (M) et dotée de moyens (15) destinés à recevoir et à maintenir de manière amovible une capsule (50) contenant des substances solubles dans l'eau ;
des moyens (202), associés audit deuxième poste (S2), destinés à perforer ladite capsule (50) et à arroser celle-ci d'eau sous pression provenant du premier poste (S1) ;
des moyens d'acheminement (159A), destinés à diriger l'eau et les substances dissoutes dans celle-ci vers l'extérieur de ladite capsule (50) ;
des moyens de canalisation (153), agencés en aval de ladite capsule (50), prévus pour diriger l'eau et les substances dissoutes dans celle-ci vers un premier bec verseur (90) en saillie vers l'extérieur au niveau dudit panneau (100) ;
un troisième poste (S3), installé en aval dudit premier poste (S1), accessible depuis l'extérieur par une fenêtre (102) pratiquée dans ledit panneau avant (100) et comprenant des éléments (35) pour l'agrippement amovible d'une nacelle (500) contenant des produits d'infusion ;
une chaudière (901, 902), alimentée par ledit premier poste (S1), déplacée en direction/en éloignement de ladite nacelle (500) et formant, à la base, des premiers éléments coopérant avec lesdits éléments d'agrippement (35) pour définir des éléments destinés à maintenir ladite nacelle (500) entre eux ;
des éléments associés à la partie inférieure de ladite chaudière (901, 902) appropriés pour introduire dans ladite nacelle (500) l'eau chauffée sous pression provenant de la chaudière elle-même ;
des éléments d'acheminement (355), disposés en aval de ladite nacelle (500), destinés à canaliser l'infusion vers l'extérieur de la nacelle (500) elle-même ;
des éléments de distribution (353), agencés sous lesdits éléments d'acheminement (355), destinés à diriger l'infusion elle-même vers un second bec verseur (92) en saillie vers l'extérieur au niveau dudit panneau (100) ;
des moyens de commande (C1) associés à une unité de commande (C) appropriés pour gérer le fonctionnement dudit appareil (M).

2. Appareil selon la revendication 1, ***caractérisé en ce que*** ledit premier poste (S1) comprend : une source (20) d'eau sous pression ; un dispositif de microfiltration d'eau (30), alimenté par ladite source par une première conduite (23), raccordé à un collecteur (123) par une deuxième conduite (31) sur lequel se trouve une première électrovanne (1) appropriée, après l'actionnement par ladite unité de commande (C), pour déterminer l'introduction d'eau à température ambiante dans le collecteur (123) lui-même ; un dispositif de refroidissement d'eau (40) raccordé en aval dudit dispositif de microfiltration (30) par une troisième conduite (34), doté d'un premier orifice de sortie raccordé audit collecteur (123) par une conduite dotée d'une deuxième électrovanne (2) dont l'actionnement par ladite unité de commande (C) provoque l'introduction d'eau froide dans le collecteur (123) lui-même ; un mélangeur (140, 141) alimenté à la fois par ledit dispositif de refroidissement (40) et par un gaz fourni par un réservoir (10), dont l'orifice de sortie est raccordé audit collecteur (123) par une quatrième conduite (53) dotée d'une troisième électrovanne (3) appropriée, après l'actionnement par ladite unité de commande (C), pour déterminer l'introduction d'eau gazeuse dans ledit collecteur (123) ; un dispositif de stérilisation (60) dérivé depuis ledit collecteur (123) dont l'orifice de sortie est raccordé à des septième (7), huitième (8) et neuvième (9) électrovannes actionnées par ladite unité de commande (C) et respectivement raccordées, par les tuyaux concernés (72, 82, 99), auxdits moyens de canalisation (153), auxdits moyens de perforation et d'arrosage (202) et à un troisième bec verseur (91) en saillie vers l'extérieur au niveau dudit panneau (100) ; une seconde pompe (P2) alimentée par ledit réservoir (S), dont l'orifice de sortie est raccordé audit deuxième poste (S2) par une sixième conduite (52) sur laquelle est installée une cinquième électrovanne (5), gérée par ladite unité de commande (C), prévue pour permettre un flux d'eau sous pression de ladite seconde pompe (P2) audit deuxième poste (S2) ou de ce dernier à un réservoir de collecte (S).

3. Appareil selon la revendication 1, ***caractérisé en ce que*** ledit premier poste (S1) comprend : une source (20) d'eau sous pression ; un dispositif de microfiltration d'eau (30), alimenté par ladite source par l'intermédiaire d'une première conduite (23) ; une première pompe (P1), alimentée par ledit filtre (30), dont l'orifice de sortie est raccordé audit troisième poste (S3) par une cinquième conduite (41) sur laquelle est installée une quatrième électrovanne (4), gérée par ladite unité de commande (C), appropriée pour permettre un flux d'eau sous pression de ladite première pompe (P1) audit troisième poste (S3) ou de ce dernier à un réservoir de collecte (S).

4. Appareil selon la revendication 1, ***caractérisé en ce que*** ledit premier poste (S1) comprend : une source (20) d'eau sous pression ; un dispositif de microfiltration d'eau (30), alimenté par ladite source par une première conduite (23), raccordé à un collecteur (123) par une deuxième conduite (31) sur lequel se trouve une première électrovanne (1) appropriée, après l'actionnement par ladite unité de commande (C), pour déterminer l'introduction d'eau à température ambiante dans le collecteur (123) lui-même ; un dispositif de refroidissement d'eau (40) raccordé en aval dudit dispositif de microfiltration (30) par une troisième conduite (34), doté d'un premier orifice de sortie raccordé audit collecteur (123) par une conduite dotée d'une deuxième électrovanne (2) dont l'actionnement par ladite unité de commande (C) provoque l'introduction d'eau froide dans le collecteur (123) lui-méme ; un mélangeur (140, 141) alimenté à la fois par ledit dispositif de refroidissement (40) et par un gaz fourni par un réservoir (10), dont l'orifice de sortie est raccordé audit collecteur (123) par une quatrième conduite (53) dotée d'une troisième électrovanne (3) appropriée, après l'actionnement par ladite unité de commande (C), pour déterminer l'introduction d'eau gazeuse dans ledit collecteur (123) ; un dispositif de stérilisation (60) dérivé depuis ledit collecteur (123) dont l'orifice de sortie est raccordé à des septième (7), huitième (8) et neuvième (9) électrovannes actionnées par ladite unité de commande (C) et respectivement raccordées, par les tuyaux concernés (72, 82, 99), auxdits moyens de canalisation (153), auxdits moyens de perforation et d'arrosage (202) et à un troisième bec verseur (91) en saillie vers l'extérieur au niveau dudit panneau (100) ; une première pompe (P1), alimentée par ledit filtre (30), dont l'orifice de sortie est raccordé audit troisième poste (S3) par une cinquième conduite (41) sur laquelle est installée une quatrième électrovanne (4), gérée par ladite unité de commande (C), appropriée pour permettre un écoulement d'eau sous pression de ladite pompe (P1) audit troisième poste (S3) ou de ce dernier à un réservoir de collecte (S) ; une seconde pompe (P2) alimentée par ledit réservoir (S), dont l'orifice de sortie est raccordé audit deuxième poste (S2) par une sixième conduite (52) sur laquelle est installée une cinquième électrovanne (5), gérée par ladite unité de commande (C), prévue pour permettre un flux d'eau sous pression de ladite seconde pompe (P2) audit deuxième poste (S2) ou de ce dernier à un réservoir de collecte (S).

5. Appareil selon la revendication 1, ***caractérisé en ce que*** lesdits moyens (15) de réception et de maintien de ladite capsule (50) comprennent: deux parois face à face (150, 151), sensiblement parallèles, dotées de rainures respectives (150A, 151A) définissant un siège adapté pour recevoir au moins une partie d'un bord (51A) dont ladite capsule (50) est dotée dans sa partie supérieure, pour empêcher des mouvements axiaux de cette dernière et faciliter la libération desdits moyens de perforation (202) de la capsule (50) elle-même ; une pluralité de billes (154) associées en paires auxdites parois face à face (150, 151) par l'interposition de premiers éléments élastiques (154A), adaptés pour recevoir au moins une partie de ladite surface de ladite capsule (50) entre elles.

6. Appareil selon la revendication 1, ***caractérisé en ce que*** lesdits moyens de perforation et d'arrosage (202) comprennent un élément tubulaire à déplacement axial (152), dont l'extrémité inférieure présente une forme convergente, qui peut être alimenté en sa partie supérieure avec de l'eau sous pression par ledit premier poste (S1) et définissant de manière interne une première chambre (152A) dotée d'une pluralité de trous (152C) adaptés pour permettre à l'eau sous pression de pénétrer dans ladite capsule (50), *et **en ce que*** lesdits moyens d'acheminement (159A) comprennent une seconde chambre (152B), définie à l'intérieur dudit élément tubulaire (152) sous ladite première chambre (152A), dotée d'au moins un premier (152D) et un second (152E) trou, respectivement prévus pour permettre l'acheminement dans ladite chambre inférieure (152B) de l'eau et desdites substances dissoutes dans celle-ci, et acheminer celles-ci dans lesdits moyens de canalisation (153).

7. Appareil selon la revendication 2 ou 4, ***caractérisé en ce que*** lesdits moyens de perforation et d'arrosage (202) sont actionnés par un second piston (200), coulissant dans un cylindre respectif, déplacé par l'effet de l'actionnement de ladite seconde pompe (P2) ou par l'action exercée par un premier ressort de rappel (G2) pour définir respectivement l'introduction ou l'extraction d'eau dans le et du cylindre lui-même et pour déterminer une configuration non fonctionnelle pour lesdits moyens de perforation et d'arrosage (202), dans lequel ladite capsule (50) est insérée entre lesdits moyens de réception (15), et une configuration de fonctionnement (E) définie après l'approche desdits moyens de perforation et d'arrosage (202) de ladite capsule (50), la perforation ultérieure du couvercle (51) et du fond (52) de celle-ci étant réalisée par les moyens de perforation et d'arrosage (202) eux-mêmes, ladite unité de commande (C) étant prévue, dans une relation de phase appropriée avec la performance de ladite perforation, pour actionner ladite septième électrovanne (7) pendant un intervalle de temps prédéterminé et par la suite pour raccorder lesdits moyens de perforation et d'arrosage (202) audit premier poste (S1) par l'actionnement de ladite huitième électrovanne (8), pour définir respectivement la distribution d'une quantité d'eau prédéterminée par ledit premier bec verseur (90) et la distribution d'une quantité d'eau prédéterminée et de substances dissoutes dans celle-ci par le même bec verseur.

8. Appareil selon la revendication 1 ou 2, ***caractérisé en ce que*** lesdits moyens de canalisation comprennent un réservoir (153) pour collecter l'eau et les substances dissoutes dans celle-ci, communiquant au fond avec ledit premier bec verseur (90), adaptés pour recevoir lesdits moyens d'acheminement (159A).

9. Appareil selon la revendication 1, ***caractérisé en ce que*** lesdits éléments d'agrippement (35) sont constitués d'une paire de mâchoires (354), soumises aux seconds éléments élastiques (354A), prévus pour fonctionner entre deux positions extrêmes, une position non fonctionnelle (I), dans laquelle lesdites mâchoires (354) sont grandes ouvertes par l'effet de l'introduction de ladite nacelle (500) entre elles, et une position fonctionnelle (O) dans laquelle lesdites mâchoires (354) sont en contact avec la surface latérale de la nacelle (500) elle-même par l'action desdits seconds éléments élastiques (354A).

10. Appareil selon la revendication 9, ***caractérisé en ce que*** lesdites mâchoires (354) définissent dans la partie supérieure, un profil présentant une forme complémentaire auxdits premiers éléments (400) et capable d'empêcher, après le couplage avec ces derniers, l'ouverture des mâchoires (354) elles-mêmes.

11. Appareil selon la revendication 1, ***caractérisé en ce que*** lesdits éléments d'acheminement sont constitués d'une pluralité de trous traversants (355), pratiqués sur une base adaptée pour recevoir la partie inférieure de ladite nacelle (500), communiquant au fond avec lesdits éléments de distribution (353).

12. Appareil selon la revendication 2 ou 4, ***caractérisé en ce que*** lesdits éléments de distribution comprennent un réservoir (353) pour collecter l'infusion, communiquant au fond avec ledit deuxième bec verseur (92).

13. Appareil selon la revendication 1, ***caractérisé en ce que*** ladite chaudière (901, 902) est déplacée par un premier piston (109), coulissant dans un cylindre respectif, déplacé après l'actionnement de ladite première pompe (P1), ou l'action exercée par un second ressort de rappel (G1), pour définir respectivement l'introduction ou l'extraction d'eau dans le et du cylindre lui-même et déterminer pour lesdits premiers éléments (400) une configuration non fonctionnelle de réception de ladite nacelle (500) entre lesdites mâchoires (354) et une configuration fonctionnelle définie après l'abaissement de ladite chaudière (901, 902) et un couplage conséquent entre la partie supérieure desdites mâchoires (354) et lesdits premiers éléments (400), ladite unité de commande (C) étant prévue pour raccorder ladite chaudière (901, 902) et ledit premier poste (S1) et pour déterminer, après qu'une valeur de pression prédéterminée a été atteinte à l'intérieur de la chaudière (901, 902) elle-même, la distribution de l'infusion par ledit deuxième bec verseur (92).

14. Appareil selon la revendication 1, ***caractérisé en ce que*** ladite chaudière (901, 902) communique avec un quatrième bec verseur (92A) par l'intermédiaire d'une canalisation sur laquelle se trouve une sixième électrovanne (6) dont l'actionnement par ladite unité de commande (C) provoque la distribution d'eau chaude par le quatrième bec verseur (92A) lui-même.

15. Appareil selon la revendication 1, ***caractérisé en ce que*** des éléments (301) sont connectés à ladite unité de commande (C) pour accepter des moyens de paiement afin de créer un crédit, adaptés pour l'appareil d'actionnement (M) lui-même.

16. appareil selon la revendication 1, ***caractérisé en ce que*** les substances contenues dans ladite capsule (50) sont constituées d'un produit concentré.

17. Appareil selon les revendications 2, 3, 4, ***caractérisé en ce que*** ladite source (2) est constituée du réseau d'adduction et de distribution d'eau.

18. Appareil selon les revendications 2, 4, ***caractérisé en ce que*** le gaz fourni par ledit réservoir (10) consiste en du dioxyde de carbone.
